# EUROPEAN PATENT SPECIFICATION

(11) **EP 3 706 894 B1**
(45) Date of publication and mention of the grant of the patent: **28.06.2023**
(21) Application number: 18811061.3
(22) Date of filing: 05.11.2018
(51) Int. Cl.: B01J 8/14, B01J 8/38, B01J 8/18, B01J 19/24

(54) **MATERIAL PROCESSING SYSTEM AND METHOD**
MATERIALVERARBEITUNGSSYSTEM UND -VERFAHREN
SYSTÈME ET PROCÉDÉ DE TRAITEMENT DE MATÉRIAUX

(30) Priority: 07.11.2017 GB 201718393
(43) Date of publication of application: 16.09.2020
(73) Proprietor: MORTIMER TECHNOLOGY HOLDINGS LTD., Thatcham, Berkshire RG7 3S7 (GB)
(72) Inventor: DODSON, Christopher, Thatcham Berkshire RG19 6HW (GB)
(74) Representative: Boult Wade Tennant LLP
(86) International application number: PCT/GB2018/053207
(87) International publication number: WO 2019/092407

(56) References cited:
- EP-A2- 0 068 853
- WO-A1-2006/003454
- WO-A1-2016/042289
- US-B2- 7 998 421

## Description

### FIELD

The present invention presents a system for and method of processing a particulate material, for example carbonaceous materials, food products or minerals, to produce a processed material having more desirable properties.

### BACKGROUND ART

The Inventor has previously developed an expanded toroidal bed reactor described in US 7 998 421 B2, which discloses particle treatment in an expanded toroidal bed reactor.

It has been discovered that this device, or a similar device, can be used to process particulate material to achieve desirable properties. In particular, the device can be used to process particulate carbonaceous material to produce activated carbon, metallurgical coke, charcoal or carbonaceous material. Advantageously, this has been found to produce products with a surprisingly high surface area.

EP 0 068 853 A2 discloses a method and apparatus for processing matter in a turbulent mass of particulate material.

WO 2006/003454 A1 discloses a process for treating a carbonaceous material.

WO 2016/042289 A1 discloses a toroidal bed reactor.

### SUMMARY

A method of processing particulate material to produce processed particulate material is provided according to claim 1.

The following describes a device that can establish a processing zone which provides for a predictable particle flow path, both circumferentially and helically, in the processing zone to ensure more uniform particle treatment and gas/solid mixing for a given residence time.

The device may be used in a method of processing a particulate material that comprises the steps of:
(a) introducing particulate material into a chamber;
(b) providing a flow of fluid into said chamber for entraining the particulate material; and
(c) removing processed fluid and/or particulate material from the chamber.

The chamber comprises a processing zone having a substantially circular transverse cross-section, the fluid flow is introduced into the processing zone at an angle of between 10° and 75° with respect to a tangent of the substantially circular transverse cross-section of the processing zone to establish a fluid flow following a substantially helical path in the processing zone.

It has been recognised that the introduction of the fluid flow into the processing zone within the above-referenced parameters is particularly suitable for establishing a uniform particle flow path. Thus, uniform particle treatment and gas/solid mixing may be achieved.

The particulate material and fluid are in contact with each other in the processing zone.

The fluid flow upon entry into the processing zone may define an angle of between 20° and 60°; or between 30° and 45° with respect to said tangent.

The fluid flow upon entry into the processing zone is preferably inclined upwardly at an angle between 5° and 45°; between 10° and 40°; between 15° and 35°; or between 20° and 30° with respect to a horizontal plane.

The particulate material may be removed at predetermined time intervals in a batch process. Alternatively, the particulate material may be fed continually into the device with egress of the processed particulates occurring automatically owing to their changed mass resulting from processing. It has been discovered that by intentional calibration of the fluid flow, the mass distribution of the processed material leaving the chamber can be predetermined.

The velocity of the fluid flow is preferably controlled so as to be greater than the terminal velocity of particulate material in the chamber that has not yet been sufficiently processed.

The direction of the fluid flow may be developed by at least one nozzle or tube. Alternatively, the direction of the fluid flow is developed by at least one vane or deflector. Preferably, however, a plurality of vanes, deflectors or tubes are employed.

The fluid flow in the chamber preferably can cause the particulate material to undergo both vertical and horizontal displacement. Thus, the mixing of the particulate material with the fluid may be maximised within the chamber.

Although the processing zone may be defined by the walls of the chamber, it is preferably formed by fluid flow in a central region of the chamber to allow particulate material to exit the processing zone and be deposited radially outwardly of the processing zone. The deposited particulate material preferably forms a flowing bed. The chamber preferably has a base inclined downwardly towards the centre of the chamber to bias particulate material in the flowing bed back towards the processing zone.

The processing zone is preferably annular or toroidal in shape. This may be achieved by providing a central conduit or pillar in the chamber, but is preferably implemented by the helical movement of the fluid flow inside the chamber.

Although the fluid may be introduced into the side or the top of the processing zone, it is preferably introduced at the base thereof. Although in certain arrangements it may be desirable for the fluid to be a liquid, it is more usually a gas. The helical fluid flow is preferably either conical or cylindrical. The apparatus further comprises a flow controller suitable for controlling the velocity of the fluid introduced into the chamber.

For a better understanding of the invention, and to show how the same may be put into effect, reference will now be made, by way of example only, to the accompanying drawings, in which:
FIG. 1 is a transverse cross-sectional view of a particulate material reactor which may be used in the invention;
FIG. 2 is a longitudinal cross-sectional view a lower portion of the reactor shown in FIG. 1;
FIG. 3 illustrates the flow path of fluid and particles in a contrasting reactor not used in the invention;
FIG. 4 illustrates the flow path of fluid and particles in a reactor which may be used in the invention;
FIGS. 5A, 5B and 5C show bottom, front and end views respectively of angled vanes provided at the base of the processing zone to direct the flow of fluid as it enters the processing zone; and
FIGS. 6A and 6B are top and side views respectively of an assembly of the vanes shown in FIG. 5.

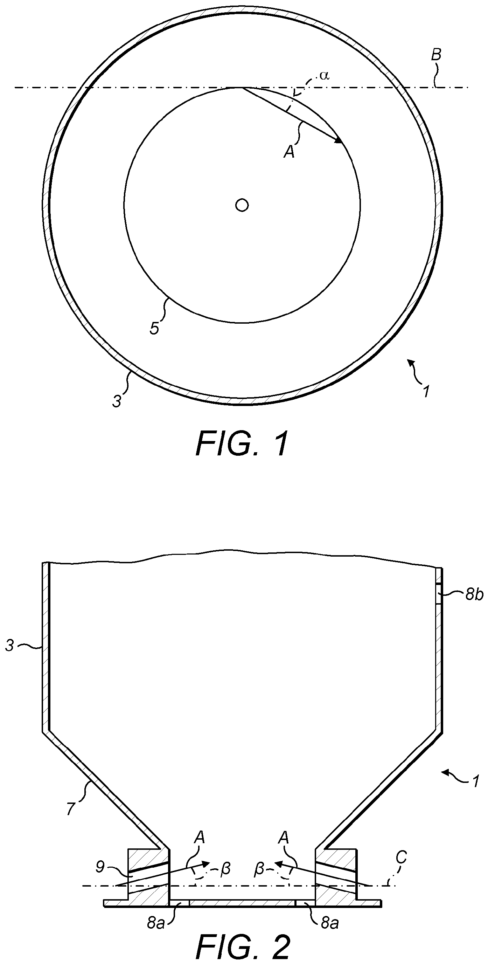

A cross-sectional view of a toroidal bed reactor (1) in accordance with a preferred embodiment of the present invention is shown in FIG. 1. The reactor (1) comprises a cylindrical housing (3) that defines a chamber inside of which a processing zone (5) is formed. The processing zone (5) is annular in shape and extends co-axially with the housing (3).

A cross-sectional view of the lower portion of the reactor (1) is shown in FIG. 2. A tapered section (7) is provided at the base of the housing (3). The tapered section (7) is inclined downwardly towards the centre of the reactor (1). Gas is introduced into the reactor (1) through a series of vanes (9) provided at the base of the tapered section (7). The vanes (9) establish a desired fluid flow path (A) within the housing (3).

A hole (8a) for the egress of processed particulates is provided in the base of the housing (3). The hole 8a is preferably annular and centred around the longitudinal axis of the housing (3).

A hole (8b) for the egress of processed particulates is provided in the side of the housing (3), distal from the base of the housing (3). This hole 8b is preferably the exhaust path of the fluid exiting the chamber. In this way, the exhaust fluid may entrain some of the processed particulates.

The vanes (9) direct the gas flow so that it enters the processing zone (5) at an angle α with respect to a tangent (B) of the substantially circular transverse cross-section of the processing zone, as shown in FIG. 1. The angle α is approximately 30° in this embodiment.

The advantage of directing the gas flow inwardly at an angle α is that there is an increased mixing of the gas flow. This provides for a uniform distribution of particulate matter as will be described below. A gas flow which is introduced along a tangent of the processing zone (angle α=0°) will produce less mixing of the gas flow, and so will provide a less uniform distribution of particulate matter.

Furthermore, the vanes (9) cause the gas to enter the processing zone at an angle β inclined upwardly with respect to a horizontal plane (C), as shown in FIG. 2. The angle β is approximately 15° in this embodiment.

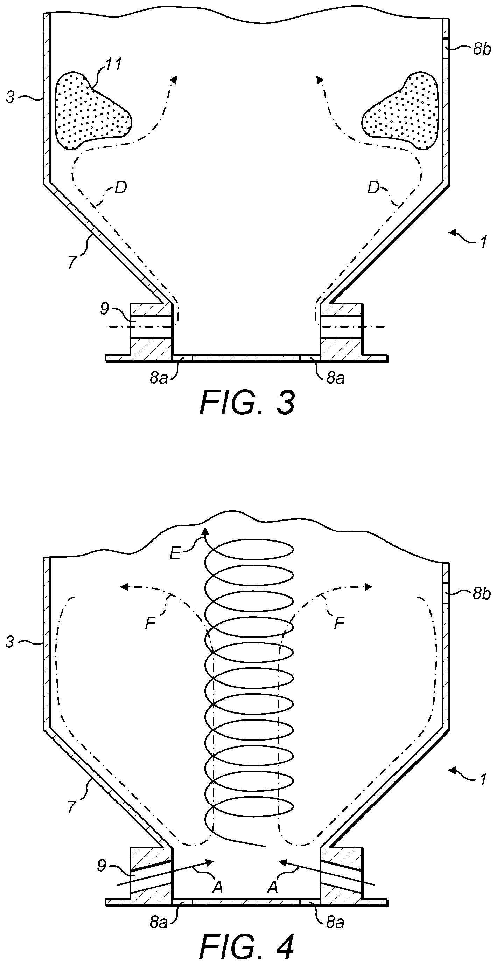

The path followed by particulate material (11) introduced into the reactor (1) will now be described for different gas flow paths with reference to FIGS. 3 and 4.

FIG. 3 shows a gas flow path (D) inside the reactor (1) when the gas enters the base of the housing (3) in a radial direction (i.e. α is 90°, and β is 0°). The gas tends to travel up the inside of the tapered section (7) and causes the particulate material (11) to collect in an annular region (9) around the inside wall of the housing (3). The gas travels towards the centre of the housing (3), around the base of the annular region (9), and up towards the top of the housing (3). Thus, the particulate material (11) comes into limited contact with the gas as it travels through the reactor (1).

In contrast, when the gas is introduced into the reactor (1) in accordance with the invention (e.g. α is 30° and β is 15°), it follows a helical flow path (E), as shown in FIG. 4. The processing zone (5) is defined by the helical flow of the gas in the housing (3). The particulate material is entrained in the vortex formed by the gas in the processing zone (5) and is transported vertically before being progressively separated from the fluid stream due to centrifugal force. By this means, the processing zone (5) utilising the present invention contains a rapidly and uniformly circulating mass of particulate material evenly distributed in the processing zone (5). A path (F) followed by the particulate material (11) introduced into the reactor (1) is shown in FIG. 4.

The even distribution of particles in the fluid flow is important to help prevent undesirable effects that may occur when the gas follows the flow path (D) shown in FIG. 3.

As shown in FIG. 4, the particulate material (11) is displaced upwardly by the fluid flow in the processing zone (5) and then expelled radially outwardly. The particulate material (11) then falls to the base of the housing (3) and a moving bed of particulate material is formed by the tapered portion (7) of the reactor (1). The moving bed returns the particulate material to the processing zone (5) under the action of gravity. The cycle is thereby repeated. This cyclical motion of the particulate material allows the reaction in the reactor (1) to be carefully controlled.

The velocity of the gas entering into the processing zone (5) is advantageously controlled to ensure that it is greater than the terminal velocity of the particulate material. This control of the fluid flow helps to reduce or prevent the collection of particulate material at the base of the reactor (1).

It has been found that if the angle β of entry of the gas into the processing zone is 10° or more above a horizontal plane, and it is inclined at an angle α of 10° or more relative to a tangent to a radial line at the point of entry, the fluid and particulate material follow the fluid path illustrated in FIG. 4. The mass of particulate material is suspended in a coherent rotating mass with particles aggregated without incipient fluidisation.

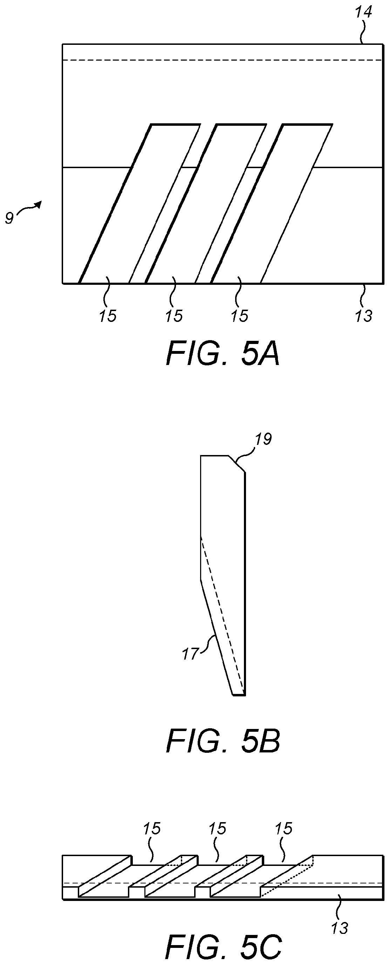

The arrangement of the vanes (9) at the base of the reactor (1) will now be described in greater detail. A single vane (9) is shown in FIGS. 5A, 5B and 5C. The vanes (9) each have a leading edge (13), a trailing edge (14) and three slots (15) formed in the surface thereof. As shown in FIG. 5B, the vanes (9) are tapered towards the leading edge (13) to form a tapered region (17) which serves to align the vanes (9) relative to each other. The slots (15) each extend from the leading edge (13) in a transverse direction across the tapered region (17). A chamfered region (19) is provided at the trailing edge of each vane (9), diametrically opposed from the tapered region (17). A front view of a vane (9) is shown in FIG. 5C.

The slots (15) extend at an angle β relative to a reference axis perpendicular to the leading edge (13) of the vane (9), as shown in FIGS. 5A and 5C. The angular offset of the slots (15) causes the gas to be introduced into the reactor (1) upwardly, at said angle β, relative to a horizontal plane, as described above.

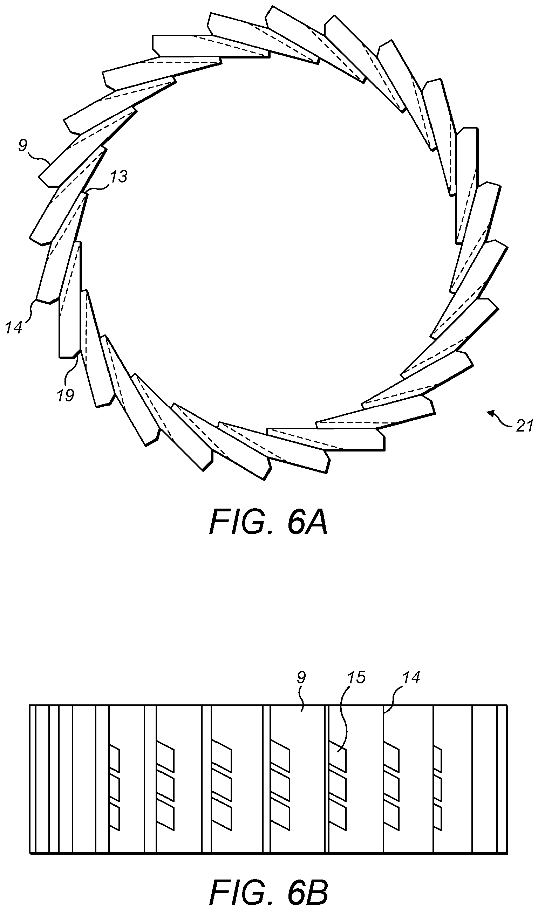

A top view of the vanes (9) arranged in an assembly (21) ready for use is shown in FIG. 6A. A side view of the assembly (21) is shown in FIG. 6B. The tapered region (17) of each of the vanes (9) determines the angular orientation of the vanes relative to each other and, thereby, the angular orientation of the slots (15). Thus, the taper angle of the tapered region (17) defines the angle α at which the gas is introduced into the processing zone (5).

The processing zone (5) is generally annular in shape because of the helical fluid flow inside the housing (3).

By controlling the angle of entry of the fluid into the processing zone to maintain it larger than 10° but less than 75° relative to the tangent to the radial line at the point of entry; and to be greater than 5° but less than 45° relative to said horizontal plane, as shown in FIGS. 1 and 2 respectively, the fluid and particulate flows can be made to circulate along a helical path, as shown in FIG. 4.

The circulating particles are accelerated by the gas flow in the processing zone (5) in both horizontal and vertical directions to travel tangentially of said circumferential flow until such accelerated particles lose their energy and settle into the flowing bed arranged circumferentially of the processing zone (5). By displacement in the flowing bed, the circulating particles are returned to the base of the processing zone (5) thereby ensuring that all of the particles in the bed are exposed to the processing gases to provide for uniform and rapid processing of said particles.

The device can be used in a process for processing particulate material with a stream of fluid in an annular processing zone. The process includes the steps of supplying the particulate material for processing into the processing zone, discharging processed material from the zone and generating in the processing zone a circumferentially directed flow of fluid to develop a circulating turbulent band of particles. The device advantageously provides a predictable particle flow path both circumferentially and helically, within the processing zone. The process preferably comprises directing the flow of fluid to develop a circulating bed, a flow of fluid directed at an angle relative to the tangent to the radial line to the point of fluid and to the horizontal plane at entry into the processing zone base.

The process may also comprise controlling fluid velocity so that it is greater than the terminal velocity of particles that have not been sufficiently processed at their point of impact on the bed base and less than the terminal velocity of particles that have been processed a desired amount in the superficial space above the bed upper surface.

### DESCRIPTION OF METHOD

A method of processing particulate material to produce processed particulate material, the method comprising the steps of: introducing the particulate material into the chamber of a toroidal bed reactor; and providing a flow of fluid into said chamber for entraining the particulate material via inlets at a lower end of the chamber.

In the following example, the particulate material is carbonaceous material. However, other materials may be used, such as minerals or clay.

Although not always the case, the carbonaceous material may be provided in a form that is undesirably wet. For example, it may have in excess of 30% moisture by weight. In fact, it may have more than 60% moisture by weight. Accordingly, an optional pre-processing step of drying the carbonaceous material to below 30% moisture is provided. This may be carried out in a toroidal bed reactor (e.g., of the type described above). The drying step is carried out at a temperature of no more than 600°C. Preferably, the drying is carried out at a temperature of no more than 200°C.

As described above, the chamber comprises a processing zone having a substantially circular transverse cross-section. The fluid flow is introduced into the processing zone at a non-perpendicular angle with respect to a tangent of the substantially circular transverse cross-section of the processing zone to establish a fluid flow following a substantially helical path in the processing chamber.

This fluid flow entrains and transports individual particulate material in a cyclical path during processing. Specifically, as may be seen in Figure 4, the unprocessed particulate material in the processing zone is entrained or lifted by the fluid flow in the inner vortex E, the velocity of which exceeds the terminal velocity of the particulate material. Owing to the cyclonic circulation of fluid, the particulate material will exit the inner processing zone E in a radially outward direction F due to centrifugal forces, and circulate under the force of gravity or by entrainment in a downward flow fluid flow to a base of the chamber where it will return to the inner vortex E processing zone to complete a cycle. This process is then repeated during which time the particle is processed.

The processing may alter the terminal velocity of the particles. Firstly, the heat of the processing fluid may alter the particles. For example, the particles will be dried. Furthermore, the particles may collide with one another of surrounding structures and break apart by a process of attrition.

The terminal velocity of an aggregated mass of particles may eventually become greater than the velocity of fluid flow introduced into the chamber at which point the particles will not be entrained by the fluid flow in the processing zone, and will not be forced radially outwardly. At this point, they will descend through the hole 8a under the force of gravity.

There may also be provided an outlet 8b at the upper end of the chamber for the exhaust of fluid out of the chamber. Fine processed particulate material may be entrained in the exhaust fluid and exit the chamber via the outlet 8b.

In preferred embodiments, the fluid flow is introduced at a velocity selected so as to achieve a predefined amount of processing of the particulate material within the chamber prior to egress from the chamber.

Preferably, this is achieved by introducing the fluid flow at a velocity selected so as to achieve a predefined residence time of the supplied particulate material within the chamber prior to egress from the chamber.

The preferred fluid flow (whether it be expressed as velocity, mass flow rate, volume flow rate, etc.) for the method may be determined by a calibration process using the device prior to the above-described processing. The calibration process comprising the steps of: introducing a particulate material into a chamber, the particulate material comprising a distribution of masses; providing a flow of fluid at a known velocity into said chamber for entraining the particulate material via inlets at a lower end of the chamber; and monitoring the mass of particulates exiting the chamber.

Alternatively, the preferred fluid flow for the method may be determined by a feedback process during the above-described process. The feedback process comprising the steps of: monitoring the mass of particulates exiting the chamber via hole 8a during processing; increasing the fluid flow in response to the mass of particulates being below a predetermined lower mass value; and decreasing the fluid flow in response to the mass of particulates being above a predetermined upper mass value.

The preferred fluid flow rate for carbonaceous material particles with a water content of less than 10% will preferably be selected to provide a residence time of at least 10 seconds, preferably no more than 500 seconds.

The fluid flow is introduced at a temperature of at least 600°C. However, it has been found that fluid in the range 800°C to 1100°C is preferable for producing activated carbon or charcoal material.

The fluid flow preferably has a temperature in the range 600°C to 1100°C.

The method is preferably used in a staged manner. Firstly, the above-described optional drying step may be used.

An optional intermediate step may be used in which the dried particulate material is processed in a toroidal bed reactor in which the temperature of the fluid flow is from 600°C to 800°C. This stage produces a product that can be used as a final product in some applications. Preferably, however, this is just an intermediate product that can be used in the final stage.

In the final stage the above described method is applied with a fluid flow temperature greater than 800°C and preferably, from 800°C to 1100°C.

Each of the stages may be carried out in a single toroidal bed reactor, or may be implemented in separate toroidal bed reactors.

In order to achieve the temperatures of the final stage, additional heating means may be provided, external to the chamber, to increase the temperature of the fluid flow. That is, the fluid is preferably preheated prior to introduction into the chamber. This is the case even when the fluid is recycled exhaust gas taken from the chamber exhaust outlet 8b.

In fact, in some embodiments, the recycled exhaust gas may comprise volatile constituents be taken from the chamber, and this may be combusted to increase the fluid temperature prior to the reintroduction of the fluid back in to the chamber.

With general applicability to other materials, but with particular benefit for the processing of carbonaceous material, the oxygen content of the chamber may be controlled.

In preferred embodiments means for measuring the oxidising agent content of the chamber is provided. Such devices are well known and include laser measuring devices. This may, for example, include means for measuring the amount of moisture, CO, CO₂, or O₂, etc. in the chamber.

An amount of oxidising agent in the fluid can be modulated in order to prevent the amount of oxidising agent in the chamber from exceeding 20%. More preferably, an amount of oxidising agent in the fluid can be modulated in order to prevent the amount of oxidising agent in the chamber from exceeding 10%. Most preferably, in particular for carbonaceous material, the amount of oxidising agent in the fluid can be modulated in order to prevent the amount of oxidising agent in the chamber from exceeding 7%.

An amount of oxidising agent in the fluid can be modulated, for example, by supplying a mix of oxygen or air with recirculated exhaust gases.

## Claims

1. A method of processing particulate material (11) to produce processed particulate material (11), the method comprising the steps of:
introducing the particulate material (11) into a chamber;
providing a flow of fluid into said chamber for entraining the particulate material (11) via inlets (9) at a lower end of the chamber; and
providing an exhaust of fluid out of the chamber via an outlet at an upper end of the chamber,
wherein the chamber comprises a processing zone (5) having a substantially circular transverse cross-section, the fluid flow being introduced into the processing zone (5) at a non-perpendicular angle with respect to a tangent of the substantially circular transverse cross-section of the processing zone (5) to establish a fluid flow following a substantially helical path in the processing chamber,
wherein:
said processing zone (5) is provided in a central region of said chamber; and
individual particulate material (11) during processing in the processing zone (5) is entrained by the fluid flow exceeding the terminal velocity of the particulate material (11), exits the processing zone (5) in a radially outward direction, circulates to a base of the chamber and then returns to the processing zone (5) in a repeated cycle; and
the chamber further comprises an opening (8a) at the base of the chamber for individual particulate material (11) which increases in mass or aggregate to form a mass of particulate material (11) with larger mass during processing until its terminal velocity exceeds the fluid flow to thereby exit the processing zone (5) by descending through the opening (8a) under gravity.

2. The method of claim 1, wherein individual particulate material which decreases in mass during processing is entrained in the exhaust fluid leaving the chamber.

3. The method of claim 1 or claim 2, wherein the fluid flow is introduced at a velocity selected so as to achieve a predefined residence time of the supplied particulate material (11) within the chamber prior to egress from the chamber.

4. The method of any preceding claim, wherein the fluid flow is introduced at a temperature of at least 600°C, preferably 800°C, preferably no more than 1100°C.

5. The method of any preceding claim, further comprising the pre-processing of carbonaceous material to achieve a moisture content of less than 30%, preferably less than 10%.

6. The method of any preceding claim, wherein the method is used to process particulate carbonaceous material to produce activated carbon.

7. The method of any one of claims 1 to 5, wherein the particulate material is particulate mineral, the mineral preferably being clay.

8. The method of claim 6 or claim 7, wherein the residence time is at least 10 seconds, preferably no more than 500 seconds.

9. The method of any preceding claim, wherein the fluid flow has a temperature in the range 600°C to 1100°C.

10. A method of processing particulate material (11) having a moisture content of greater than 30% by weight to produce processed particulate material (11), the method comprising the steps of:
processing particulate material (11) in a toroidal bed reactor (1) in a drying stage to reduce the moisture content to below 30% to produce dried particulate material (11) using a method according to any one of the preceding claims in which the temperature of the fluid flow is below 600°C, preferably below 200°C; and
processing the dried particulate material (11) in a toroidal bed reactor (1) in a final stage using a method according to any one of the preceding claims in which the temperature of the fluid flow is greater than 600°C, preferably greater than 800°C.

11. A method of processing particulate material (11) having a moisture content of greater than 30% by weight to produce processed particulate material (11), the method comprising the steps of:
processing particulate material (11) in a toroidal bed reactor (1) in a drying stage to reduce the moisture content to below 30% to produce dried particulate material (11) using a method according to any one of the preceding claims in which the temperature of the fluid flow is below 600°C, preferably below 200°C;
processing the dried particulate material (11) in a toroidal bed reactor (1) in an intermediate stage to produce an intermediate particulate material (11) using a method according to any one of the preceding claims in which the temperature of the fluid flow is from 600°C to 800°C; and
processing the intermediate particulate material (11) in a toroidal bed reactor (1) in a final stage using a method according to any one of the preceding claims in which the temperature of the fluid flow is greater than 600°C, preferably greater than 800°C.

12. The method of claim 11, wherein the method processes particulate material (11) having a moisture content of greater than 60% by weight.

13. The method of any preceding claim, wherein an amount of oxidising agent in the fluid is controlled to prevent the amount of oxidising agent in the chamber from exceeding 20%, preferably 10%, more preferably 7%.

14. The method of any preceding claim, wherein the fluid is preheated prior to introduction into the chamber.

15. The method of any preceding claim, wherein the fluid is recycled exhaust gas from the chamber.

## Patentansprüche

1. Verfahren zum Verarbeiten von partikulärem Material (11), um verarbeitetes partikuläres Material (11) herzustellen, das Verfahren umfassend die folgenden Schritte:
Einbringen des partikulären Materials (11) in eine Kammer;
Bereitstellen eines Fluidstroms in der Kammer zum Mitführen des partikulären Materials (11) über Einlässe (9) an einem unteren Ende der Kammer; und
Bereitstellen eines Auslassfluids aus der Kammer über einen Auslass an einem oberen Ende der Kammer,
wobei die Kammer eine Verarbeitungszone (5) mit einem im Wesentlichen kreisförmigen Querschnitt umfasst, wobei der Fluidstrom in die Verarbeitungszone (5) in einem nicht rechtwinkligen Winkel in Bezug auf eine Tangente des im Wesentlichen kreisförmigen Querschnitts der Verarbeitungszone (5) eingeführt wird, um einen Fluidstrom aufzubauen, der einem im Wesentlichen spiralförmigen Pfad in der Verarbeitungskammer folgt,
wobei:
die Verarbeitungszone (5) in einem zentralen Bereich der Kammer bereitgestellt ist; und einzelnes partikuläres Material (11) während der Verarbeitung in der Verarbeitungszone (5) vom Fluidstrom, der die Endgeschwindigkeit des partikulären Materials (11) übersteigt, mitgeführt wird, die Verarbeitungszone (5) in einer radial nach außen gerichteten Richtung verlässt, zu einem Boden der Kammer zirkuliert und dann zu der Verarbeitungszone (5) zurückkehrt in einem wiederholten Zyklus; und
die Kammer ferner eine Öffnung (8a) an der Basis der Kammer für einzelnes partikuläres Material (11) umfasst, das an Masse zunimmt oder aggregiert, um eine Masse aus partikulärem Material (11) mit größerer Masse während der Verarbeitung zu bilden, bis seine Endgeschwindigkeit den Fluidstrom übersteigt, um dadurch die Verarbeitungszone (5) durch Absinken durch die Öffnung (8a) unter Schwerkraft zu verlassen.

2. Verfahren nach Anspruch 1, wobei einzelnes partikuläres Material, das während der Verarbeitung an Masse abnimmt, vom die Kammer verlassenden Abgasfluid mitgeführt wird.

3. Verfahren nach Anspruch 1 oder Anspruch 2, wobei der Fluidstrom eingebracht wird mit einer Geschwindigkeit, so ausgewählt, dass eine vordefinierte Verweilzeit des zugeführten partikulären Materials (11) innerhalb der Kammer erreicht wird, bevor es aus der Kammer austritt.

4. Verfahren nach einem vorhergehenden Anspruch, wobei der Fluidstrom bei einer Temperatur von mindestens 600°C, bevorzugt 800°C, bevorzugt nicht mehr als 1100°C eingebracht wird.

5. Verfahren nach einem vorhergehenden Anspruch, ferner umfassend die VorVerarbeitung von kohlenstoffhaltigem Material, um einen Feuchtigkeitsgehalt von weniger als 30 %, bevorzugt weniger als 10 %, zu erreichen.

6. Verfahren nach einem vorhergehenden Anspruch, wobei das Verfahren verwendet wird, um partikuläres kohlenstoffhaltiges Material zu verarbeiten, um Aktivkohle herzustellen.

7. Verfahren nach einem der Ansprüche 1 bis 5, wobei das partikuläre Material partikuläres Mineral ist, wobei das Mineral bevorzugt Ton ist.

8. Verfahren nach Anspruch 6 oder Anspruch 7, wobei die Verweilzeit mindestens 10 Sekunden, bevorzugt nicht mehr als 500 Sekunden, beträgt.

9. Verfahren nach einem vorhergehenden Anspruch, wobei der Fluidstrom eine Temperatur im Bereich von 600°C bis 1100°C aufweist.

10. Verfahren zum Verarbeiten von partikulärem Material (11) mit einem Feuchtigkeitsgehalt von mehr als 30 Gew.-%, um verarbeitetes partikuläres Material (11) herzustellen, das Verfahren umfassend die folgenden Schritte:
Verarbeiten von partikulärem Material (11) in einem Toroidbettreaktor (1) in einer Trocknungsstufe, um den Feuchtigkeitsgehalt auf unter 30 % zu verringern, um getrocknetes partikuläres Material (11) unter Verwendung eines Verfahrens nach einem der vorhergehenden Ansprüche herzustellen, bei dem die Temperatur des Fluidstroms unter 600°C, bevorzugt unter 200°C, liegt; und
Verarbeiten des getrockneten partikulären Materials (11) in einem Toroidbettreaktor (1) in einer Endstufe unter Verwendung eines Verfahrens nach einem der vorhergehenden Ansprüche, bei dem die Temperatur des Fluidstroms größer als 600°C, bevorzugt größer als 800°C, ist.

11. Verfahren zum Verarbeiten von partikulärem Material (11) mit einem Feuchtigkeitsgehalt von mehr als 30 Gew.-%, um verarbeitetes partikuläres Material (11) herzustellen, das Verfahren umfassend die folgenden Schritte:
Verarbeiten von partikulärem Material (11) in einem Toroidbettreaktor (1) in einer Trocknungsstufe, um den Feuchtigkeitsgehalt auf unter 30 % zu verringern, um getrocknetes partikuläres Material (11) unter Verwendung eines Verfahrens nach einem der vorhergehenden Ansprüche herzustellen, bei dem die Temperatur des Fluidstroms unter 600°C, bevorzugt unter 200°C, liegt;
Verarbeiten des getrockneten partikulären Materials (11) in einem Toroidbettreaktor (1) in einer Zwischenstufe zur Herstellung eines partikulären Zwischenmaterials (11) unter Verwendung eines Verfahrens nach einem der vorhergehenden Ansprüche, bei dem die Temperatur des Fluidstroms von 600°C bis 800°C ist; und
Verarbeiten des partikulären Zwischenmaterials in einem Toroidbettreaktor (1) in einer Endstufe unter Verwendung eines Verfahrens nach einem der vorhergehenden Ansprüche, bei dem die Temperatur des Fluidstroms größer als 600°C, bevorzugt größer als 800°C, ist.

12. Verfahren nach Anspruch 11, wobei das Verfahren partikuläres Material (11) mit einem Feuchtigkeitsgehalt von größer als 60 Gew.-% verarbeitet.

13. Verfahren nach einem vorhergehenden Anspruch, wobei eine Menge an Oxidationsmittel in dem Fluid kontrolliert wird, um zu verhindern, dass die Menge an Oxidationsmittel in der Kammer 20 %, bevorzugt 10 %, stärker bevorzugt 7 % übersteigt.

14. Verfahren nach einem vorhergehenden Anspruch, wobei das Fluid vor dem Einbringen in die Kammer vorgewärmt wird.

15. Verfahren nach einem vorhergehenden Anspruch, wobei das Fluid rückgeführtes Auslassgas aus der Kammer ist.

## Revendications

1. Procédé de traitement d'un matériau particulaire (11) pour produire un matériau particulaire traité (11), le procédé comprenant les étapes consistant à :
introduire le matériau particulaire (11) dans une chambre ;
fournir un écoulement de fluide dans ladite chambre pour entraîner le matériau particulaire (11) via des entrées (9) au niveau d'une extrémité inférieure de la chambre ; et
fournir un échappement de fluide hors de la chambre via une sortie au niveau d'une extrémité supérieure de la chambre,
dans lequel la chambre comprend une zone de traitement (5) ayant une section transversale sensiblement circulaire, l'écoulement de fluide étant introduit dans la zone de traitement (5) à un angle non perpendiculaire par rapport à une tangente de la section transversale sensiblement circulaire de la zone de traitement (5) pour établir un écoulement de fluide suivant un trajet sensiblement hélicoïdal dans la chambre de traitement,
dans lequel :
ladite zone de traitement (5) est prévue dans une région centrale de ladite chambre ; et
le matériau particulaire individuel (11) pendant le traitement dans la zone de traitement (5) est entraîné par l'écoulement de fluide dépassant la vitesse terminale du matériau particulaire (11), sort de la zone de traitement (5) dans une direction radialement vers l'extérieur, circule vers une base de la chambre et ensuite retourne à la zone de traitement (5) dans un cycle répété ; et
la chambre comprend en outre une ouverture (8a) au niveau de la base de la chambre pour qu'un matériau particulaire individuel (11), dont la masse ou l'agrégat augmente, forme une masse de matériau particulaire (11) ayant une plus grande masse pendant le traitement jusqu'à ce que sa vitesse terminale dépasse l'écoulement de fluide pour ainsi sortir de la zone de traitement (5) en descendant à travers l'ouverture (8a) par gravité.

2. Procédé de la revendication 1, dans lequel le matériau particulaire individuel dont la masse diminue pendant le traitement est entraîné dans le fluide d'échappement quittant la chambre.

3. Procédé de la revendication 1 ou la revendication 2, dans lequel l'écoulement de fluide est introduit à une vitesse sélectionnée de manière à atteindre un temps de séjour prédéfini du matériau particulaire (11) fourni dans la chambre avant son évacuation de la chambre.

4. Procédé de l'une quelconque des revendications précédentes, dans lequel l'écoulement de fluide est introduit à une température d'au moins 600°C, de préférence de 800°C, de préférence d'au plus 1100°C.

5. Procédé de l'une quelconque des revendications précédentes, comprenant en outre le prétraitement d'un matériau carboné pour atteindre une teneur en humidité inférieure à 30 %, de préférence inférieure à 10 %.

6. Procédé de l'une quelconque des revendications précédentes, le procédé étant utilisé pour traiter un matériau carboné particulaire afin de produire du charbon actif.

7. Procédé de l'une quelconque des revendications 1 à 5, dans lequel le matériau particulaire est un minéral particulaire, le minéral étant de préférence de l'argile.

8. Procédé de la revendication 6 ou la revendication 7, dans lequel le temps de séjour est d'au moins 10 secondes, de préférence d'au plus 500 secondes.

9. Procédé de l'une quelconque des revendications précédentes, dans lequel l'écoulement de fluide a une température dans la plage allant de 600°C à 1100°C.

10. Procédé de traitement d'un matériau particulaire (11) ayant une teneur en humidité supérieure à 30 % en poids pour produire un matériau particulaire traité (11), le procédé comprenant les étapes consistant à :
traiter un matériau particulaire (11) dans un réacteur à lit toroïdal (1) dans une phase de séchage pour réduire la teneur en humidité à moins de 30 % afin de produire un matériau particulaire séché (11) en utilisant un procédé selon l'une quelconque des revendications précédentes dans lequel la température de l'écoulement de fluide est inférieure à 600°C, de préférence inférieure à 200°C ; et
traiter le matériau particulaire séché (11) dans un réacteur à lit toroïdal (1) dans une phase finale en utilisant un procédé selon l'une quelconque des revendications précédentes dans lequel la température de l'écoulement de fluide est supérieure à 600°C, de préférence supérieure à 800°C.

11. Procédé de traitement d'un matériau particulaire (11) ayant une teneur en humidité supérieure à 30 % en poids pour produire un matériau particulaire traité (11), le procédé comprenant les étapes consistant à :
traiter un matériau particulaire (11) dans un réacteur à lit toroïdal (1) dans une phase de séchage pour réduire la teneur en humidité à moins de 30 % afin de produire un matériau particulaire séché (11) en utilisant un procédé selon l'une quelconque des revendications précédentes dans lequel la température de l'écoulement de fluide est inférieure à 600°C, de préférence inférieure à 200°C ;
traiter le matériau particulaire séché (11) dans un réacteur à lit toroïdal (1) dans une phase intermédiaire pour produire un matériau particulaire intermédiaire (11) en utilisant un procédé selon l'une quelconque des revendications précédentes dans lequel la température de l'écoulement de fluide est comprise entre 600°C et 800°C ; et
traiter le matériau particulaire intermédiaire (11) dans un réacteur à lit toroïdal (1) dans une phase finale en utilisant un procédé selon l'une quelconque des revendications précédentes dans lequel la température de l'écoulement de fluide est supérieure à 600°C, de préférence supérieure à 800°C.

12. Procédé de la revendication 11, le procédé traitant un matériau particulaire (11) ayant une teneur en humidité supérieure à 60 % en poids.

13. Procédé de l'une quelconque des revendications précédentes, dans lequel une quantité d'agent oxydant dans le fluide est régulée pour empêcher la quantité d'agent oxydant dans la chambre de dépasser 20 %, de préférence 10 %, plus préférablement 7 %.

14. Procédé de l'une quelconque des revendications précédentes, dans lequel le fluide est préchauffé avant son introduction dans la chambre.

15. Procédé de l'une quelconque des revendications précédentes, dans lequel le fluide est un gaz d'échappement recyclé à partir de la chambre.
